# EUROPÄISCHE PATENTSCHRIFT

(11) **EP 0 818 638 B1**
(45) Veröffentlichungstag und Bekanntmachung des Hinweises auf die Patenterteilung: **02.05.2002**
(21) Anmeldenummer: 97110748.7
(22) Anmeldetag: 01.07.1997
(51) Int. Cl.: F16F 9/54, F16F 3/087

(54) **Stiftlager für die elastische Befestigung eines Stossdämpfers**
Bolt-mounting for the elastic fixing of a shock absorber
Montage-boulon pour la fixation élastique d'un amortisseur

(30) Priorität: 11.07.1996 DE 19627908
(43) Veröffentlichungstag der Anmeldung: 14.01.1998
(73) Patentinhaber: BASF Aktiengesellschaft, 67063 Ludwigshafen (DE)
(72) Erfinder: Giesen, Klaus, 49401 Damme (DE); Tiemann, Andreas, 32312 Lübbecke (DE); Burlage, Thomas, 49134 Wallenhorst (DE)

(56) Entgegenhaltungen:
- DE-A- 4 115 921
- DE-C- 647 247
- FR-A- 1 114 553
- GB-A- 242 503
- US-A- 2 389 562
- US-A- 5 456 454
- "POLYURETHANE SHOCKS STAND UP TO ROUGH TERRAIN" MACHINE DESIGN, Bd. 67, Nr. 10, 25. Mai 1995, Seite 32 XP000518857

## Beschreibung

Die Erfindung betrifft eine elastische Befestigung der Kolbenstange eines Stoßdämpfers am Aufbau eines Kraftfahrzeuges gemäß dem Oberbegriff des Anspruches 1.

Stoßdämpfer wandeln Schwingungsenergie in Wärme um und bringen damit Schwingungen zum Abklingen. Als Bestandteil des Fahrwerks von Kraftfahrzeugen haben sie einen wesentlichen Einfluß auf das Schwingungsverhalten von Achsen und Aufbauten. Insbesondere die dynamischen Radlastschwankungen und die Beschleunigung der Hauptmasse, d.h. die Fahrsicherheit und der Fahrkomfort eines Kraftfahrzeuges werden von Stoßdämpfern entscheidend mitbestimmt. Als unvollkommen gilt aber bei Kolbenstoßdämpfern immer noch ihre Befestigung am Aufbau eines Kraftfahrzeuges mit Hilfe eines sog. Stiftlagers.

Stiftlager sind in verschiedenen Ausführungsformen bekannt. Bei dem Stiftlager gemäß der deutschen Gebrauchsmusterschrift 1 811 684 ist die Kolbenstange eines Teleskopstoßdämpfers dadurch elastisch gelagert, daß oberhalb und unterhalb der Einführung in den Aufbau des Kraftfahrzeuges Einlagen aus elastischem Material vorgesehen sind, die mittels Endscheiben bzw. Preßteilen oben und unten vorgespannt werden können. Die maximale Vorspannung ist durch eine Distanzbuchse begrenzt. Ein solches Stiftlager ist in der Lage, beim Einfedern der Kolbenstange eine Bewegung nach oben und beim Ausfedern eine Bewegung nach unten zu ermöglichen. Querkräfte aus der Kolbenstangenbewegung können dagegen nur in einem beschränkten Maße aufgenommen werden.

Weiterhin ist aus der US-A-5 465 454 ein Abstützlager für Kraftfahrzeuge mit einem Stoßdämpfer, dessen Kolbenstange am Aufbau des Kraftfahrzeuges befestigt ist, bekannt. Das freie Ende der Kolbenstange ist durch den Aufbau hindurchgeführt, jeweils unter Zwischenschaltung einer elastischen Einlage sowie einer Endscheibe beidseits des Aufbaus gelagert und durch eine Gewindemutter befestigt, wobei die elastischen Einlagen in mit dem Aufbau verbundenen Töpfen eingesetzt sind. Bei dieser Konstruktion ist es zwar möglich, die elastischen Einlagen vorzuspannen und zunächst eine flache Federkennlinie sicherzustellen. Die weitere Einfederung mit dann progressivem Anstieg der Federkennlinie ist jedoch dadurch begrenzt, daß die Endscheiben bei entsprechendem Kraftanstieg auf den Rändern der Töpfe aufsitzen und eine in Stützrichtung starre Verbindung bilden. Es ist somit eine verhältnismäßig große Bauhöhe dieser Abstützlager erforderlich, die sich hauptsächlich aus der großen Höhe der nicht vorgespannten Einlagen aus elastischem Werkstoff ergibt. Auch im vorgespannten Zustand muß die bekannte Einlage höher sein als der Topf tief ist, da nur dann noch eine für die Funktion des Lagers erforderliche Federung erreichbar ist.

Mit der Erfindung soll eine elastische Befestigung der Kolbenstange eines Stoßdämpfers am Aufbau eines Kraftfahrzeuges geschaffen werden, welche von den geschilderten Mängeln frei ist.

Zur Lösung dieser Aufgabe werden die Maßnahmen nach dem Kennzeichen des Anspruchs 1 vorgeschlagen.

Erfindungsgemäß bestehen die elastischen Einlagen des Stiftlagers aus einem zelligen Polyurethan-Elastomer. Derartige Elastomere sind volumenkompressibel und an sich bekannt. Sie entstehen durch Reaktionen von Polyhydroxylkomponenten (Polyester oder Polyether) mit Diisocyanaten und anschließender Umsetzung mit einem Vernetzungsmittel. Ihre Verarbeitung zu Formkörpern wie zelligen Einlagen von Stoßdämpfer-Befestigungen erfolgt in an sich bekannter Weise nach dem Gieß- oder Spritzgießverfahren. Die Formgebung der Einlagen kann so an die jeweiligen Einbaubedingungen leicht angepaßt werden.

Die elastischen Einlagen sind in mit dem Aufbau verbundenen Töpfen eingesetzt. Es können so als elastische Einlagen besonders einfach herzustellende kegelstumpfförmige Elemente verwendet werden, deren Außendurchmesser ebenso groß wie der Innendurchmesser der Töpfe sein kann. Nach dem Einbau stehen die elastischen Einlagen aus zelligem elastomerem Material nicht mehr über die Töpfe über. Nach der Erfindung sind die elastischen Einlagen aus dem zelligen elastomeren Material kürzer als die bekannten Einlagen aus kompaktem elastomerem Material. In der Folge davon kann die abgesetzte Länge am Ende der Stoßdämpfer-Kolbenstange kürzer ausgeführt werden.

Die Befestigungen am Aufbau eines Kraftfahrzeuges müssen im Fahrbetrieb im allgemeinen der Stoßdämpfer-Kolbenstange einen größeren Weg nach oben als nach unten möglich machen. Um dabei ein Abheben der elastischen Einlagen zu vermeiden, muß die obere Einlage mehr als die untere vorgespannt sein. Bei Verwendung eines zelligen Polyurethan-Elastomers läßt sich diese Forderung einfach dadurch erfüllen, daß die Einlage oben in einer geringeren Rohdichte als die der Einlage unten ausgeführt wird.

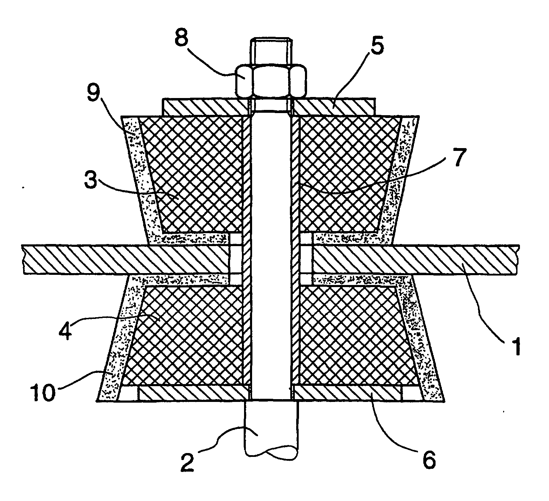

Die Erfindung wird nachfolgend unter Hinweis auf die Zeichnung anhand eines Ausführungsbeispieles erläutert.

Das erfindungsgemäße Lager dient der elastischen Befestigung der Kolbenstange (2) eines Stoßdämpfers - in der Zeichnung nicht dargestellt - am Aufbau (1) eines Kraftfahrzeuges. Dabei ist die Kolbenstange durch den Aufbau hindurchgeführt und trägt auf jeder Seite des Aufbaus eine elastische Einlage (3) und (4) aus einem Polyurethan-Elastomer. Diese Einlagen sind in mit dem Aufbau (1) auf jeder Seite form- oder kraftschlüssig befestigten Töpfen (9) und (10) eingesetzt und mittels Endscheiben (5, 6) abgedeckt. Die Einlagen liegen völlig innerhalb der Töpfe und sind durch eine Gewindemutter (8) sowie die Endscheiben (5) oben und (6) unten vorgespannt. Das Maß der Vorspannung wird durch die Länge der Distanzbuchse (7) bestimmt.

## Patentansprüche

1. Elastische Befestigung der Kolbenstange (2) eines Stoßdämpfers am Aufbau eines Kraftfahrzeuges, bei dem das freie Ende der Kolbenstange (2) durch den Aufbau (1) hindurchgeführt, jeweils unter Zwischenschaltung einer elastischen Einlage (3, 4) sowie einer Endscheibe (5, 6) beidseits des Aufbaus (1) gelagert und durch eine Gewindemutter (8) befestigt ist, wobei die elastischen Einlagen (3, 4) in mit dem Aufbau (1) verbundenen Töpfen (9, 10) eingesetzt sind, **dadurch gekennzeichnet, daß** die elastischen Einlagen (3, 4) aus einem zelligen Polyurethan-Elastomer bestehen, und nicht über den Rand der Töpfe überstehen, wobei der Außendurchmesser der jeweiligen Endscheibe (5, 6) kleiner ist als der Innendurchmesser des zugeordneten Topfes (9, 10).

2. Elastische Befestigung der Kolbenstange eines Stoßdämpfers nach Anspruch 1, **dadurch gekennzeichnet, daß** die elastischen Einlagen (3, 4) unterschiedliche Rohdichten aufweisen.

## Claims

1. An elastic fastening of the piston rod (2) of a shock absorber to the body of a motor vehicle, in which the free end of the piston rod (2) is led through the body (1), is mounted on both sides of the body (1), in each case with an elastic insert (3, 4) and an end plate (5, 6) being interposed, and is fastened by a screw nuts the elastic inserts (3, 4) being inserted in pots (9, 10) connected to the body (1), wherein the elastic inserts (3, 4) consist of a cellular polyurethane elastomer and do not project beyond the edge of the pots, the outside diameter of the respective end plate (5, 6) being smaller than the inside diameter of the associated pot (9, 10).

2. The elastic fastening of the piston rod of a shock absorber as claimed in claim 1, wherein the elastic inserts (3, 4) have different bulk densities.

## Revendications

1. Fixation élastique de la tige de piston(2) d'un amortisseur sur la carrosserie d'un véhicule automobile, dans lequel l'extrémité libre de la tige de piston (2) est passée à travers la carrosserie (1), est chaque fois montée, avec interposition d'un insert élastique (3, 4) ainsi que d'une rondelle d'extrémité (5, 6) des deux côtés de la carrosserie (1) et est fixée à l'aide d'un écrou (8) taraudé, les inserts élastiques (3, 4) étant insérés dans des pots (9, 10) reliés à la carrosserie (1), **caractérisée en ce que** les inserts élastiques (3, 4) sont constitués d'un matériau élastomère alvéolaire à base de polyuréthanne et ne dépassent pas du bord des pots, le diamètre extérieur de la rondelle (5, 6) d'extrémité étant inférieur au diamètre intérieur du pot (9, 10) associé.

2. Fixation élastique de la tige de piston d'un amortisseur selon la revendication 1, **caractérisé en ce que** les inserts élastiques (3, 4) ont des masses volumiques à l'état brut de valeurs différentes.
